# EUROPÄISCHE PATENTSCHRIFT

(11) **EP 1 418 006 B1**
(45) Veröffentlichungstag und Bekanntmachung des Hinweises auf die Patenterteilung: **08.12.2010**
(21) Anmeldenummer: 03103792.2
(22) Anmeldetag: 14.10.2003
(51) Int. Cl.: B04C 5/24, B04C 5/26, B04C 11/00

(54) **Zyklonabscheider**
Cyclone separator
Séparateur cyclone

(30) Priorität: 07.11.2002 DE 10251677
(43) Veröffentlichungstag der Anmeldung: 12.05.2004
(73) Patentinhaber: MANN+HUMMEL GmbH, 71638 Ludwigsburg (DE)
(72) Erfinder: Hilpert, Torsten, 71729, Erdmannhausen (DE); Trautmann, Pius Dr., 70499, Stuttgart (DE)

(56) Entgegenhaltungen:
- WO-A-01/92690
- DE-A1- 19 729 439
- GB-A- 2 284 165
- US-A- 1 890 070

## Beschreibung

Die Erfindung betrifft einen Zyklonabscheider mit den Merkmalen nach dem Oberbegriff des Anspruchs 1. Ein solcher Zentrifugalabscheider ist beispielsweise aus GB-A-2 284 165 bekannt.

Zyklonabscheider bekannter Bauart werden bei einer Vielzahl von Einrichtungen zur Reinigung eines Gasstromes von mitgeführten Fremdstoffen eingesetzt. Solche Fremdstoffe können Staubpartikel, Flüssigkeitströpfchen oder dgl. sein. Insbesondere ist die Anordnung eines Zyklonabscheiders in einer Kurbelgehäuseentlüftung eines Verbrennungsmotors bekannt. Über die Kurbelgehäuseentlüftung werden sogenannte "Blow-by-Gase" in den Ansaugkanal des Verbrennungsmotors geleitet. Dabei ist eine möglichst vollständige Abscheidung von im Gasstrom mitgeführten Öltröpfchen erwünscht.

Zur Abscheidung mitgeführter Fremdstoffe wird der Gasstrom etwa tangential in einen Zyklon mit etwa rundem Querschnitt geleitet, wodurch ein schnelldrehender Wirbel entsteht. Die auf die mitgeführten Fremdstoffe wirkenden Fliehkräfte führen zu einer Ablagerung an der Zyklonwandung. Die auf diese Weise abgeschiedenen Fremdstoffe können beispielsweise unter Einwirkung der Schwerkraft aus dem unteren Bereich des Zyklons entnommen werden. Der entsprechend gereinigte Gasstrom wird in etwa achsnah aus dem Zyklon herausgeleitet.

Bei einer Vielzahl von Anwendungen, insbesondere bei einer Kurbelgehäuseentlüftung sind erhöhte Anforderungen an die Reinigungsleistung des Zyklonabscheiders gestellt. Zur Erhöhung der Wirksamkeit sind Zyklonabscheider mit kaskadenartig in Reihe geschalteten Zyklonen bekannt, wobei in einer bezogen auf die Durchströmrichtung ersten Zyklonanordnung eine Vorreinigung und in einer oder mehreren nachfolgenden Zyklonanordnungen eine entsprechende Nachreinigung erfolgt. Derartige Zyklonabscheider können für einen vorgegebenen Betriebsbereich hinsichtlich Reinigungswirkung und Strömungswiderstand durch Druckverlust beim Durchströmen ausgelegt werden. Zur Reinigung von Gasströmen mit einer hohen Bandbreite des auftretenden Volumenstromes gestaltet sich die Anpassung eines geeigneten Zyklonabscheiders als schwierig. Bei einer Anpassung an den maximal auftretenden Volumenstrom kann die Reinigungswirkung bei geringeren Volumenströmen unter Umständen nicht ausreichend sein, während bei einer Anpassung beispielsweise an einen mittleren Volumenstrom der Strömungswiderstand bei auftretendem maximalen Volumenstrom zu hoch werden kann.

Bei einer aus WO-A-0192690 bekannten Vorrichtung zur Abscheidung von Kurbelgehäuse-Entlüfungsgasen einer Brennkraftmaschine mit einem Ölnebelabscheider ist vorgesehen, den Ölnebelabscheider in Abhängigkeit der sich am Ölnebeiabscheider einstellenden Druckdifferenz insgesamt mittels einer Bypassleitung zu umgehen. Ein erster, vorgeschalteter Zyklonanordnung ist nicht vorgesehen und der Teilstrom wird ohne Behandlung durch einen Zyklonabscheider an der Abscheideanordnung vorbei geleitet.

Der Erfindung liegt die Aufgabe zugrunde, einen gattungsgemäßen Zyklonabscheider derart weiterzubilden, daß eine gute Abscheidungswirkung bei geringem Strömungswiderstand über einen verbreiterten Betriebsbereich gegeben ist.

Diese Aufgabe wird durch einen Zyklonabscheider mit den Merkmalen des Anspruchs 1 gelöst.

Der erfindungsgemäße Zyklonabscheider umfaßt eine erste und eine zweite in Reihe geschaltete Zyklonanordnung, wobei ein die zweite Zyklonanordnung umgehender Bypaßkanal und eine volumenstromgesteuerte Ventileinrichtung zur Bemessung eines durch den Bypaßkanal hindurchleitbaren Teilstromes vorgesehen ist. Dazu ist in einem die erste mit der zweiten Zyklonanordnung verbindenden Hauptstromkanal eine um eine Schwenkachse schwenkbare Stauklappe zur Steuerung der Ventileinrichtung angeordnet. Eine derartige schwenkbare Stauklappe ist mechanisch einfach aufgebaut. Die volumenstromabhängige Schwenkung der Stauklappe wird zuverlässig und mit einfachen Mitteln zur Betätigung der Ventileinrichtung herangezogen. Die vorgeschlagene Anordnung kann derart an einen geringen oder mittleren zu reinigenden Volumenstrom angepaßt sein, daß der Gasstrom sequentiell im wesentlichen durch beide Zyklonanordnungen mit einer entsprechend guten Reinigungswirkung geleitet wird. Die Ventileinrichtung schließt dabei den Bypaßkanal vollständig oder zumindest teilweise ab, so daß kein oder allenfalls ein geringfügiger Teilstrom des zu reinigenden Gasstromes durch den Bypaßkanal hindurchgeleitet wird.

Mit steigendem Volumenstrom wird entweder umschaltbar oder funktional ansteigend ein Teilstrom durch den Bypaßkanal hindurchgeleitet. Unter Umgehung der zweiten Zyklonanordnung erfährt der Teilstrom im Bypaßkanal einen geringeren Strömungswiderstand, wodurch der Gesamtströmungswiderstand des Zyklonabscheiders mit steigendem Volumenstrom nur in geringem Umfang ansteigt. Der Verlust an Reinigungswirkung durch zumindest teilweise Umgehung der zweiten Zyklonanordnung wird dabei dadurch aufgewogen oder sogar überkompensiert, daß der durch die erste Zyklonanordnung geführte Gesamtvolumenstrom durch seine ansteigende Strömungsgeschwindigkeit dort zu einer erhöhten Abscheidungswirkung führt. Ein unerwünschter, übermäßiger Anstieg des Strömungswiderstandes mit steigendem Gesamtvolumenstrom ist dadurch zuverlässig vermieden, während gleichzeitig über einen breiten Bereich auftretender Volumenströme eine gute Abscheidungswirkung gegeben ist.

Die Stauklappe ist dabei zweckmäßig derart ausgestaltet, daß in ihrem Ruhezustand ein freier, durch die Stauklappe nicht abgedeckter Querschnittsbereich im Hauptstromkanal, insbesondere zwischen zumindest einer Wand des Hauptstromkanals und der Stauklappe verbleibt. Bei entsprechender Bemessung des freien Querschnittsbereiches und Ausbildung der Stauklappe bzw. der Ventileinrichtung können kleine oder mittlere Volumenströme durch den freien Querschnittsbereich hindurchgeführt werden, ohne daß die Stauklappe eine Schwenkbewegung ausführt. Dadurch kann in einfacher Weise sichergestellt werden, daß die Ventileinrichtung erst oberhalb eines vorgegebenen Volumenstromes einen Teilstrom durch den Bypaßkanal hindurchleitet. Es ist dabei mit einfachen Mitteln sichergestellt, daß kleine bzw. mittlere Volumenströme zumindest näherungsweise vollständig durch beide aufeinanderfolgende Zyklonanordnungen unter Erzielung der entsprechenden Abscheidungswirkung geleitet wird. In einer vorteilhaften Ausgestaltung weist die Stauklappe einen etwa rechteckigen Grundriß und der Hauptstromkanal im Bereich der Stauklappe einen auf einer Seite eckigen und auf der gegenüberliegenden Seite gerundeten Querschnitt auf. Dabei ist die Schwenkachse an der eckigen Querschnittsseite wandnah angeordnet. Die wandnahe Anordnung der Schwenkachse im Bereich der eckigen Querschnittsseite läßt eine freie Verschwenkbarkeit der Stauklappe zu, während die gerundete Querschnittsseite zu einem insgesamt geringen Strömungswiderstand beiträgt. Der rechteckige Grundriß der Stauklappe führt zu einer einfachen Herstellbarkeit und ergibt gleichzeitig durch den geometrischen Unterschied zur Querschnittsform des Hauptstromkanals einen oder mehrere gewünschte freie Querschnittsbereiche.

Zur Vermeidung eines Teilstromes durch den Bypaßkanal unterhalb eines vorgegebenen Gesamtvolumenstromes ist die Ventileinrichtung zweckmäßig derart ausgelegt, daß sie im Ruhezustand dichtend auf den Bypaßkanal wirkt. Dabei umfaßt die Ventileinrichtung vorteilhaft eine schwenkbare, den freien Querschnitt des Bypaßkanals steuernde Ventilklappe. Neben einem einfachen mechanischen Aufbau mit geringer Störungsempfindlichkeit kann dadurch die Ventileinrichtung wahlweise als Schaltelement oder als mit beliebigen Zwischenpositionen zwischen einer geschlossenen und einer voll geöffneten Stellung einstellbares Steuerelement ausgebildet sein. Es ist nahezu jede gewünschte Steuercharakteristik allein durch geometrische Vorgaben einstellbar.

Für einen einfachen Aufbau des Zyklonabscheiders im Bereich der Ventileinrichtung wird vorgeschlagen, daß der Bypaßkanal im Bereich der Ventilklappe einen rechteckigen Querschnitt und die Ventilklappe einen dazu passenden rechteckigen Grundriß aufweist. Die Rechteckform führt zu einer einfachen Herstellbarkeit und erlaubt neben einer ungestörten Verschwenkbarkeit der Ventilklappe auch eine zuverlässige Verschließung des Bypaßkanals.

Zur weiteren Vereinfachung des Aufbaus bei zuverlässiger Wirkung sind vorteilhaft die Ventilklappe und die Stauklappe um eine gemeinsame Schwenkachse schwenkbar und insbesondere einteilig ausgebildet. Unter Vermeidung zusätzlicher Übertragungselemente wie Steuergestänge oder dgl. ist eine zuverlässige Funktion bei geringen Fertigungs- und Montagekosten gegeben.

Die Grundrißfläche der Stauklappe ist zweckmäßig kleiner als die Grundrißfläche der Ventilklappe ausgebildet. Dadurch ist erreicht, daß bei teilweise oder vollständiger Verschwenkung der Stauklappe und der Ventilklappe in Richtung der geöffneten Position eine allenfalls geringfügige, je nach geometrischen Gegebenheiten nicht weiter ins Gewicht fallende Störung des in den Bypaßkanal hineingeleiteten Teilstromes gegeben ist.

Als gut abgestimmt hinsichtlich Abscheidungswirkung und Strömungswiderstand hat sich eine Anordnung herausgestellt, bei der die erste Zyklonanordnung zwei parallel zueinander geschaltete Zyklone und die zweite Zyklonanordnung nur einen Zyklon umfaßt.

Ausführungsbeispiele der Erfindung sind im folgenden anhand der Zeichnung näher beschieben. Es zeigen:
- Fig. 1: in einer Prinzipskizze einen Zyklonabscheider mit zwei parallel geschalteten Zyklonen, einer ersten Zyklonanordnung und einer mittels eines Bypaßkanals umgehbaren zweiten Zyklonanordnung;
- Fig. 2: eine schematische Querschnittsdarstellung des Bypaßkanals nach Fig. 1 im Bereich der Ventilklappe;
- Fig. 3: eine schematische Querschnittsdarstellung des Hauptstromkanals der Anordnung nach Fig. 1 im Bereich der Stauklappe mit teils eckigem und teils gerundetem Querschnitt;
- Fig. 4: eine Variante der Querschnittsgestaltung nach Fig. 3 mit quadratischem Querschnitt und gelochter Stauklappe.

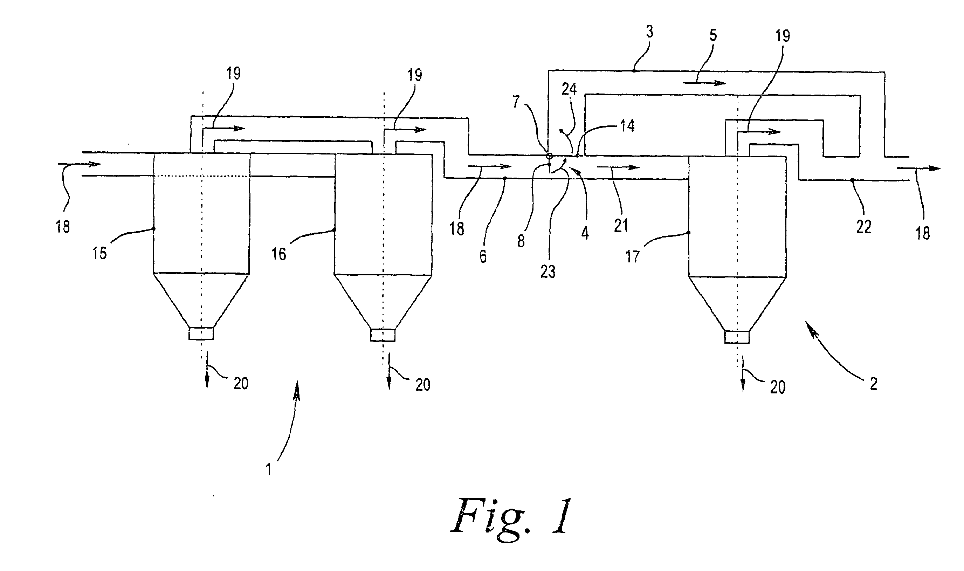

Fig. 1 zeigt in schematischer Darstellung einen Zyklonabscheider mit einer ersten Zyklonanordnung 1 und einer zweiten Zyklonanordnung 2. Der Zyklonabscheider 1 wird in Richtung einer durch Pfeile 18 dargestellten Durchströmrichtung von einem Gasstrom durchströmt, wobei bezogen auf die Durchströmrichtung 18 die zweite Zyklonanordnung 2 in Reihe zur ersten Zyklonanordnung 1 geschaltet ist.

Es sind insgesamt drei etwa baugleiche Zyklone 15, 16, 17 vorgesehen. Die erste Zyklonanordnung 1 umfaßt die beiden Zyklone 15, 16, die parallel zueinander geschaltet sind. Die zweite Zyklonanordnung 2 umfaßt nur den einzelnen Zyklon 17. Es kann auch zweckmäßig sein, die Zyklonanordnungen 1, 2 mit jeweils nur einem oder einer beliebigen anderen Anzahl von Zyklonen 15, 16, 17 zu versehen. Die Zyklone 15, 16, 17 können sich auch hinsichtlich Größe und Auslegung voneinander unterscheiden.

Der eingangsseitig im Bereich der ersten Zyklonanordnung einströmende, Fremdstoffe mitführende Gasstrom wird parallel in die beiden Zyklone 15, 16 etwa tangential dazu eingeleitet, wodurch in den beiden Zyklonen 15, 16 ein Fliehkraft erzeugender Wirbel entsteht. Durch die Fliehkraft abgeschiedene Fremdstoffe werden an der Unterseite der Zyklone 15, 16 durch Pfeile 20 angedeutet abgeleitet. Auf der den Pfeilen 20 gegenüberliegenden Oberseite der Zyklone 15, 16 werden in der ersten Zyklonanordnung 1 vorgereinigte Teilgasströme in Richtung der Pfeile 19 abgeleitet und in einem Hauptstromkanal 6 zusammengeführt.

Die erste und die zweite Zyklonanordnung 1, 2 ist mittels des Hauptstromkanals 6 strömungsleitend derart miteinander verbunden, daß sich eine Reihenschaltung ergibt. Hinsichtlich Wirkungsweise, Merkmalen und Bezugszeichen entspricht der Zyklon 17 der zweiten Zyklonanordnung 2 den Zyklonen 15, 16 der ersten Zyklonanordnung 1. In der zweiten Zyklonanordnung 2 erfolgt eine Nachreinigung des in der ersten Zyklonanordnung 1 vorgereinigten Gasstromes. Die Ableitung des gereinigten Gasstromes erfolgt über einen angedeuteten Ausgangskanal 22.

Die gezeigte Anordnung weist einen Bypaßkanal 3 auf, der mit einem Ende in den Hauptstromkanal 6 und dem anderen Ende in den Ausgangskanal 22 mündet. Dabei umgeht der Bypaßkanal 3 durch Parallelschaltung die zweite Zyklonanordnung 2. Bedarfsweise ist der durch den Hauptstromkanal 6 in Durchströmrichtung 18 strömende Gasstrom in einem zur zweiten Zyklonanordnung 2 führenden Hauptstrom und einen parallel dazu durch den Bypaßkanal führenden Teilstrom 5 aufteilbar. Dazu ist im Bereich der Mündung des Bypaßkanals 3 in den Hauptstromkanal 6 eine volumenstromgesteuerte Ventileinrichtung 4 zur Bemessung des durch den Bypaßkanal 3 hindurchleitbaren Teilstromes 5 vorgesehen.

Die Ventileinrichtung 4 umfaßt im gezeigten Ausführungsbeispiel eine in den Querschnitt des Hauptstromkanals 6 ragende Stauklappe 8 sowie eine winklig dazu, den Querschnitt der Bypaßleitung 3 abdeckenden Ventilklappe 14. Die Stauklappe 8 und die Ventilklappe 14 sind im gezeigten Ausführungsbeispiel einteilig ausgebildet und um eine gemeinsame Schwenkachse 7 aus der gezeigten Ruhelage heraus in Richtung der Pfeile 23, 24 verschwenkbar. Die Verschwenkung der gezeigten Ventileinrichtung 4 erfolgt abhängig vom Volumenstrom im Hauptstromkanal 6 stromauf der Ventileinrichtung 4 unter Nutzung des auf die Stauklappe 8 wirkenden Staudruckes. Dabei kann die Verschwenkung beispielsweise gegen eine rückstellende Federkraft oder gegen ein Rückstellmoment in Folge der Gewichtskraft der Ventileinrichtung 4 erfolgen.

Mit zunehmendem Volumenstrom im Hauptstromkanal 6 erfolgt eine zunehmende Verschwenkung der Ventileinrichtung 4 in Richtung der Pfeile 23, 24. In dessen Folge nimmt der Teilstrom 5 ebenfalls zu und der Hauptstrom 21 um das entsprechende Maß ab. Bei voll geöffneter Ventileinrichtung 4 bleibt im gezeigten Ausführungsbeispiel ein anteiliger Hauptstrom 21. Es kann jedoch auch eine Ausbildung zweckmäßig sein, bei der der Hauptstrom 21 zumindest näherungsweise vollständig unterbunden wird, wobei der gesamte den Zyklonabscheider durchströmende Gasstrom als Teilstrom 5 durch die Bypaßleitung 3 in Umgehung der zweiten Zyklonanordnung 2 geleitet wird. Des weiteren kann vorgesehen sein, daß die Ventileinrichtung 4 volumenstromgesteuert bei Erreichen eines vorgegebenen Grenzvolumenstromes eine Schaltbewegung ausführt, wobei der Bypaßkanal 3 entsprechend freigegeben ist.

Je nach Anwendungsfall kann es auch zweckmäßig sein, die Stauklappe 8 getrennt von der Ventileinrichtung 4 auszubilden, wobei die Ventileinrichtung 4 auch an beliebiger anderer Stelle des Bypaßkanals 3 angeordnet sein kann. Dabei kommt eine mechanische Kopplung beispielsweise über Steuerstangen, Kurvenscheiben oder eine beliebige andere, beispielsweise elektrische Kopplung zwischen der Stauklappe 8 und der Ventileinrichtung 4 in Betracht. Die gezeigte Anordnung ist für eine Kurbelgehäuseentlüftung eines Verbrennungsmotors zur Abscheidung von Ölanteilen der "Blow-by-Gase" vorgesehen. Dabei kann es zweckmäßig sein, daß anstelle der Mündung der Bypaßleitung 3 in den Ausgangskanal 22 eine direkte Einleitung in einen Ansaugkanal des Verbrennungsmotors vorgesehen ist. Die gezeigte Anordnung ist darüber hinaus zur Reinigung von Gasströmen in beliebiger anderer Anwendung geeignet.

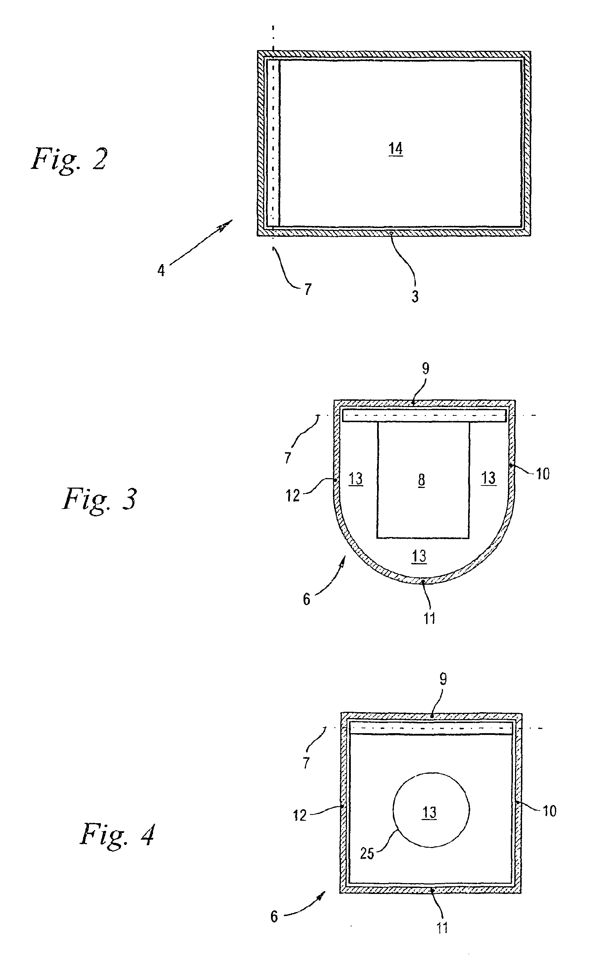

Fig. 2 zeigt in einer Prinzipdarstellung einen Querschnitt durch die Bypaßleitung 3 der Anordnung nach Fig. 1 im Bereich der Ventilklappe 14. Die Ventilklappe 14 weist im gezeigten Ausführungsbeispiel einen rechteckigen Grundriß und der Bypaßkanal 3 in diesem Bereich einen dazu passenden rechteckigen Querschnitt auf. In der gezeigten Ruhestellung der Ventilklappe 14 wirkt diese dichtend auf den Bypaßkanal 3. Durch Schwenkung der Ventilklappe 14 um die Schwenkachse 7 in Richtung des Pfeiles 24 (Fig. 1) erfolgt eine Steuerung des freien Querschnitts im Bypaßkanal 3. Es kann auch eine Ventileinrichtung 4 vorgesehen sein, die bereits im Ruhezustand einen freien Querschnittsbereich im Bypaßkanal 3 und damit die Ausbildung eines zumindest geringen Teilstromes 5 (Fig. 1) im Bypaßkanal 3 erlaubt.

Fig. 3 zeigt in einer schematischen Querschnittsdarstellung den Hauptstromkanal 6 nach Fig. 1 im Bereich der Stauklappe 8. Der Hauptstromkanal 6 ist durch Wände 9, 10, 11, 12 gebildet und weist im Bereich der Wände 9, 10, 12 einen rechteckigen Querschnitt auf. An der gegenüberliegenden Seite ist der Querschnitt des Bypaßkanals im Bereich der Wand 11 gerundet ausgeführt. Die Schwenkachse 7 ist an der eckigen Querschnittsseite nahe zur Wand 9 angeordnet. Die Stauklappe 8 weist einen etwa rechteckigen Grundriß auf, wobei zwischen der Stauklappe 8 und den Wänden 10, 11, 12 ein freier, durch die Stauklappe 8 im gezeigten Ruhezustand nicht abgedeckter Querschnittsbereich 13 verbleibt. Es kann auch eine Ausbildung der Stauklappe 8 derart zweckmäßig sein, daß im Ruhezustand der Querschnitt des Hauptstromkanals 6 vollständig abgedeckt ist. Schon bei geringen Volumenströmen durch den Hauptstromkanal 6 erfolgt dabei eine Betätigung der Stauklappe 8 und bei entsprechender Ankoppelung auch gegebenenfalls der Ventilklappe 14 (Fig. 2). Im gezeigten Ausführungsbeispiel ist die Grundrißfläche der Stauklappe 8 bedeutend kleiner als die Grundfläche der Ventilklappe 14 (Fig.2) ausgebildet.

Fig. 4 zeigt eine Variante der Anordnung nach Fig. 3, bei der die Wände 9, 10, 11, 12 einen rechteckigen, hier etwa quadratischen Querschnitt des Hauptstromkanals 6 bilden. Die Stauklappe 8 füllt im gezeigten Ruhezustand den Querschnitt des Hauptstromkanals 6 mit ihrer Außenkontur aus. Dabei bleibt ein freier, durch die Stauklappe 8 nicht abgedeckter Querschnittsbereich 13 durch eine in der Stauklappe 8 angeordnete, hier beispielhaft kreisförmig ausgeführte Öffnung 25.

In den gezeigten Ausführungsbeispielen ist die Stauklappe 8 als etwa ebene Platte ausgebildet. Zur Anpassung ihrer Steuercharakteristik beispielsweise durch Erhöhung oder Absenkung ihres Strömungswiderstandes kann die Steuerklappe 8 in aerodynamisch angepaßter Formgebung ausgestaltet sein. Es kann auch die Anordnung von aerodynamischen Leitflächen oder die Ausbildung der Steuerklappe 8 als aerodynamische Leitfläche vorteilhaft sein.

## Patentansprüche

1. Zyklonabscheider mit einer bezogen auf die Durchströmrichtung (18) ersten Zyklonanordnung (1) und einer in Reihe dazu geschalteten zweiten Zyklonanordnung (2), **dadurch gekennzeichnet, daß** ein die zweite Zyklonanordnung (2) umgehender Bypaßkanal (3) und eine volumenstromgesteuerte Ventileinrichtung (4) zur Bemessung eines durch den Bypaßkanal (3) hindurchleitbaren Teilstroms (5) vorgesehen ist, wobei in einem die erste mit der zweiten Zyklonanordnung (1, 2) verbindenden Hauptstromkanal (6) eine um eine Schwenkachse (7) schwenkbare Stauklappe (8) zur Steuerung der Ventileinrichtung (4) angeordnet ist.

2. Zyklonabscheider nach Anspruch 1,
**dadurch gekennzeichnet, daß** im Ruhezustand der Stauklappe (8) ein freier, durch die Stauklappe (8) nicht abgedeckter Querschnittsbereich (13) im Hauptstromkanal (6) insbesondere zwischen zumindest einer Wand (9, 10, 11, 12) des Hauptstromkanals (6) und der Stauklappe (8) verbleibt.

3. Zyklonabscheider nach Anspruch 1 oder 2,
**dadurch gekennzeichnet, daß** die Stauklappe (8) einen etwa rechteckigen Grundriß und der Hauptstromkanal (6) im Bereich der Stauklappe (8) einen auf einer Seite eckigen und auf der gegenüberliegenden Seite gerundeten Querschnitt aufweist, wobei die Schwenkachse (7) an der eckigen Querschnittsseite wandnah angeordnet ist.

4. Zyklonabscheider nach einem der Ansprüche 1 bis 3,
**dadurch gekennzeichnet, daß** die Ventileinrichtung (4) im Ruhezustand dichtend auf den Bypaßkanal (3) wirkt.

5. Zyklonabscheider nach einem der Ansprüche 1 bis 4,
**dadurch gekennzeichnet, daß** die Ventileinrichtung (4) eine schwenkbare, den freien Querschnitt des Bypaßkanals (3) steuernde Ventilklappe (14) umfaßt.

6. Zyklonabscheider nach den Ansprüchen 4 und 5,
**dadurch gekennzeichnet, daß** der Bypaßkanal (3) im Bereich der Ventilklappe (14) einen rechteckigen Querschnitt und die Ventilklappe (14) einen dazu passenden rechteckigen Grundriß aufweist.

7. Zyklonabscheider nach Anspruch 5 oder 6,
**dadurch gekennzeichnet, daß** die Ventilklappe (14) und die Stauklappe (8) gemeinsam um die Schwenkachse (7) schwenkbar und insbesondere einteilig ausgebildet sind.

8. Zyklonabscheider nach Anspruch 7,
**dadurch gekennzeichnet, daß** die Grundrißfläche der Stauklappe (8) kleiner oder gleich als die Grundrißfläche der Ventilklappe (14) ist.

9. Zyklonabscheider nach einem der Ansprüche 1 bis 8,
**dadurch gekennzeichnet, daß** die erste Zyklonanordnung (1) zwei parallel zueinander geschaltete Zyklone (15, 16) und die zweite Zyklonanordnung (2) nur einen Zyklon (17) umfaßt.

## Claims

1. Cyclone separator with a first cyclone arrangement (1) in relation to the throughflow direction (18) and a second cyclone arrangement (2) connected in series with the first, **characterized in that** a bypass duct (3) by-passing the second cyclone arrangement (2) and a volumetric flow controlled valve assembly (4) for measuring a partial flow (5) that can be guided through the bypass duct (3) are provided, an air-flow sensor flap (8) pivoting around a swiveling axis (7) for controlling the valve assembly (4) being disposed in a main flow duct (6) connecting the first with the second cyclone arrangement (1, 2).

2. Cyclone separator according to claim 1, **characterized in that** when the air-flow sensor flap (8) is in idle condition a free cross-sectional area (13) not covered by the air-flow sensor flap (8) remains in the main flow duct (6), in particular between at least one wall (9, 10, 11, 12) of the main flow duct (6) and the air-flow sensor flap (8).

3. Cyclone separator according to claim 1 or 2, **characterized in that** the air-flow sensor flap (8) features an approximately rectangular outline and that the main flow duct (6) features in the area of the air-flow sensor flap (8) a cross-section that is angular on one side and rounded on the opposing side, the swiveling axis (7) being disposed on the angular cross-sectional side near the wall.

4. Cyclone separator according to one of the claims 1 to 3, **characterized in that** the valve assembly (4) in idle condition has a sealing impact on the bypass duct (3).

5. Cyclone separator according to one of the claims 1 to 4, **characterized in that** the valve assembly (4) comprises a pivotable valve flap (14) controlling the free cross-section of the bypass duct (3).

6. Cyclone separator according to the claims 4 and 5, **characterized in that** the bypass duct (3) features in the area of the valve flap (14) a rectangular cross-section and the valve flap (14) a rectangular outline matching the cross-section.

7. Cyclone separator according to claim 5 or 6, **characterized in that** the valve flap (14) and the air-flow sensor flap (8) are together formed pivotably and in particular as one-piece around the swiveling axis (7).

8. Cyclone separator according to claim 7, **characterized in that** the outline plane of the air-flow sensor flap (8) is smaller or equal to the outline plane of the valve flap (14).

9. Cyclone separator according to one of the claims 1 to 8, **characterized in that** the first cyclone arrangement (1) comprises two cyclones (15, 16) connected in parallel to each other and the second cyclone arrangement (2) only one cyclone (17).

## Revendications

1. Séparateur à cyclone avec, considéré dans le sens du flux (18), un premier ensemble de cyclones (1) et un deuxième ensemble de cyclones (2) monté en série avec le premier, **caractérisé en ce qu'**un canal de dérivation (3) contournant le deuxième ensemble de cyclones (2) et un dispositif à soupape (4) à débit volumique contrôlé sont prévus pour mesurer un flux partiel (5) pouvant être acheminé à travers le canal de dérivation (3), un régulateur de l'admission d'air (8) pivotant autour d'un axe de pivotement (7) servant à commander le dispositif à soupape (4) étant disposée dans un canal de flux principal (6) reliant le premier ensemble de cyclones avec le deuxième ensemble de cyclones (1, 2).

2. Séparateur à cyclone selon la revendication 1, **caractérisé en ce que**, lorsque le régulateur de l'admission d'air (8) est en position de repos, une partie de la section (13) libre et non recouverte par le régulateur de l'admission d'air (8) reste dans le canal de flux principal (6), en particulier entre au moins une paroi (9, 10, 11, 12) du canal de flux principal (6) et le régulateur de l'admission d'air (8).

3. Séparateur à cyclone selon la revendication 1 ou 2, **caractérisé en ce que** le régulateur de l'admission d'air (8) a un tracé à peu près rectangulaire et que le canal de flux principal (6) présente dans la zone du régulateur de l'admission d'air (8) une section angulaire d'un côté et une section arrondie du côté opposé, l'axe de pivotement (7) étant placé près de la paroi du côté de la section angulaire.

4. Séparateur à cyclone selon l'une des revendications 1 à 3, **caractérisé en ce que**, en position de repos, le dispositif à soupape (4) a un effet d'étanchéité sur le canal de dérivation (3).

5. Séparateur à cyclone selon l'une des revendications 1 à 4, **caractérisé en ce que** le dispositif à soupape (4) comprend un clapet de soupape (14) pivotant et commandant la section libre du canal de dérivation (3).

6. Séparateur à cyclone selon les revendications 4 et 5, **caractérisé en ce que** le canal de dérivation (3) présente une section rectangulaire dans la zone du clapet de soupape (14) et que le clapet de soupape (14) a un tracé rectangulaire correspondant.

7. Séparateur à cyclone selon la revendication 5 ou 6, **caractérisé en ce que** le clapet de soupape (14) et la vanne de retenue (8) peuvent pivoter ensemble autour de l'axe de pivotement (7) et sont notamment faits d'une seule pièce.

8. Séparateur à cyclone selon la revendication 7, **caractérisé en ce que** la surface de tracé de la vanne de retenue (8) est plus petite ou de la même taille que la surface de tracé du clapet de soupape (14).

9. Séparateur à cyclone selon l'une des revendications 1 à 8, **caractérisé en ce que** le premier ensemble de cyclones (1) comprend deux cyclones (15, 16) montés en parallèle et le deuxième ensemble de cyclones (2) comprend un seul cyclone (17).
